# EUROPEAN PATENT SPECIFICATION

(11) **EP 1 923 436 B1**
(45) Date of publication and mention of the grant of the patent: **21.01.2009**
(21) Application number: 07254390.3
(22) Date of filing: 07.11.2007
(51) Int. Cl.: C09D 167/00

(54) **Powder compositions comprising Beta-Hydroxyalkyl amides from the ring-opening of acidic coumpounds**
Pulverzusammensetzungen mit Beta-Hydroxyalkylamiden von der Ringöffnung saurer Verbindungen
Compositions à base de poudre comprenant des Bêta-Hydroxyalkyl amides à partir de l'ouverture de cycle de composés acides

(30) Priority: 15.11.2006 US 859053 P
(43) Date of publication of application: 21.05.2008
(73) Proprietor: Rohm and Haas Company, Philadelphia, PA 19106-2399 (US)
(72) Inventor: Daly, Andrew T., Sinking Spring, PA 19608 (US); Finch, William C., Ambler, PA 19002 (US); Tullos, Gordon L., Reading, PA 19606 (US)
(74) Representative: Buckley, Guy Julian

(56) References cited:
- EP-A- 1 134 266
- EP-A- 1 319 698
- WO-A-00/55266

## Description

The present invention relates to powder compositions which comprise one or more polymer or resin and one or more β-hydroxyalkyl amide curing agent that is made from one or more cyclic acidic compound and that provide coatings and films having reduced defects. More particularly, the present invention relates to coating or film forming powder compositions and methods of making and using the same; wherein the compositions comprise one or more β-hydroxyalkyl amide curing agent chosen from β-hydroxyalkyl amide curing agent made from the reaction of one or more lactorie or lactide with one or more alkanolamine compound, oligomeric β-hydroxyalkyl amide curing agent made from the reaction of one or more mixture of aromatic anhydride with aliphatic anhydride with one or more alkanolamine compound, mixtures thereof, and mixtures thereof with one or more tetrafunctional β-hydroxyalkyl amide curing agent.

β-Hydroxyalkyl amides, especially tetrafunctional β-hydroxyalkyl amides, are commonly used as curing agents in combination with carboxyl functional polyester resins to produce decorative and/or protective coating films. Recently, β-hydroxyalkyl amide curing agents have gained favor due to the respiratory inhalant hazards of and actual or potential regulatory limits placed on the use of polyepoxy curing agents, such as triglycidyl isocyanurate.

The crosslinking of carboxyl group bearing polymers or resins and β-hydroxyalkyl amides typically occurs at elevated temperature and produces water as a reaction by-product. During coating film formation at elevated temperatures, water generated from the crosslinking reaction escapes from the film surface as steam. Especially in the case of tetrafunctional β-hydroxyalkyl amides, the escaping steam causes surface flaws in the resulting paint film such as "pinholes" and "craters". Surface defects due to moisture out-gassing during cure are generally greater as film thickness increases. Whether because of overspray or electrostatic effects, areas of parts having coatings that are more than 75 - 100 µm thick are more likely to display undesirable surface defects. Further, the difficulty of accurately controlling powder coating film thickness at 75 -100 µm or less on the entire surface of complex shaped parts makes surface defects even more common in coatings on such parts. Still further, the tendency of such coatings to form surface defects means that the amount of filler used in a coating powder needs to be reduced to retain comparable surface smoothness and coating appearance. Yet still further, coating powders having certain high oil absorption fillers fail to provide coatings having an acceptable appearance or smoothness. Accordingly, powder coatings produced using tetrafunctional β-hydroxyalkyl amides can be more expensive than corresponding coatings produced using other curing agents.

U.S. Patent No. 6,767,479, to Rossi et al., discloses coating powder compositions exhibiting reduced out-gassing defects and which comprise carboxyl functional polyester resins and blends of a difunctional β-hydroxyalkyl amide with tetrafunctional β-hydroxyalkyl amide. The blended cure agent has an effective crosslinking functionality between 2.1 and 3.9 rather than the 4.0 displayed by the tetrafunctional β-hydroxyalkyl amide. The reduced functionality of the blended cure agent lengthens the gel time of the formulated coating system resulting in fewer outgas defects in thicker coating films. The aromatic β-hydroxyalkyl amide curing agents of Rossi et al. are the reaction products of aromatic acids or acid chlorides with (di)ethanolamine compounds in solvent, leaving the solvent to be removed before making a product useful in powders. Likewise, the disclosed tetrafunctional β-hydroxyalkyl amides are the reaction product of a carboxylic acid diester with two equivalents of diethanolamine after which the reaction mixture is heated and methanol has to be removed by distillation or fractionation. Solvent and alcohol removal is costly and time consuming. Further, the preparation of the tetrafunctional β-hydroxyalkyl amides has proven difficult, requiring the slow or gradual addition of ethanolamine, slow and gradual heating, or both, and can result in the undesirable formation of dimers due to removal of the ethanolamine by distillation. Still further, solvents and alcohols comprise volatile organic compounds (VOCs) which pose a potential threat to the environmental and to public health.

The present Applicants seek to solve the problem of providing β-hydroxyalkyl amide curing agents for coating powders that consistently produce coated articles free of outgas defects while providing β-hydroxyalkyl amide curing agents via a simple process that does not involve or need the use of VOCs.

According to the present invention, coating or film forming powder compositions comprise one or more β-hydroxyalkyl amide curing agent comprising the reaction of one or more cyclic acidic compound and an alkanolamine compound containing one or more β-aminoalcohol. The powder compositions comprise one or more β-hydroxyalkyl amide curing agent chosen from β-hydroxyalkyl amide curing agents made from the reaction of one or more lactone or lactide with one or more alkanolamine compound containing one or more β-aminoalcohol, oligomeric β-hydroxyalkyl amide curing agents made from the reaction of one or more mixture of aromatic anhydride with aliphatic anhydride with one or more alkanolamine compound, mixtures thereof, and mixtures thereof with one or more tetrafunctional β-hydroxyalkyl amide curing agent, and one or more film-forming polymer or resin chosen from carboxyl-functional polyesters having an acid number of from 15 to 100 mg KOH/g, carboxyl-functional acrylic polymers having an acid number of from 15 to 100 mg KOH/g, carboxyl-functional unsaturated polyesters, carboxyl-functional polyesters containing urethane groups, epoxy-polyester hybrids, mixtures thereof, and combinations thereof.

Suitable cyclic acidic compounds for making the curing agent may be chosen from one or more lactone, lactide, mixture of aromatic anhydride with aliphatic anhydride, and any mixture thereof. Preferably, the alkanolamine compound is diethanolamine, diisopropanolamine, or a C₁ to C₁₈ linear or branched α-alk(en)yl substituted diethanolamine or diisopropanolamine.

The β-hydroxyalkyl amide curing agents can comprise compounds of the following formula (I):

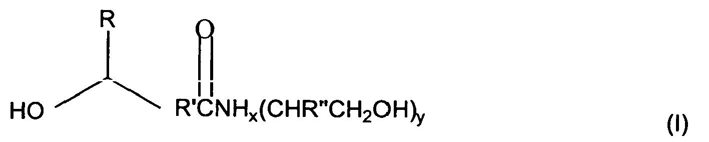

in which formula, R and R" independently represent H, or monovalent C₁ to C₁₈ linear or branched alkyl radicals which may contain aryl, cycloalkyl and alkenyl groups; R' represents either a covalent bond or a divalent C₁ to C₅ alkylene radical where the alkylene radical may bear alkyl group substituents; y is the integer 1 or 2; x is 0 or 1, such that (x + y) =2.

In another embodiment, the oligomeric β-hydroxyalkyl amide curing agents of the present invention comprise the reaction product of alkanolamine compound with one or more mixture of aromatic anhydride with aliphatic anhydride, and have an effective β-hydroxyalkyl amide functionality of from 1.1 to 5.5, preferably, of 1.7 or more to insure a reasonably rapid rate of cure and, preferably 3.99 or less to enable the coating powder to provide a more defect free coating. Preferably, the aromatic anhydride is phthalic anhydride and the aliphatic anhydride is chosen from one or more anhydride of a C₄ to C₁₈ alkanedioic add, such as succinic anhydride, glutaric anhydride or adipic anhydride, or one or more anhydride of a C₄ to C₁₈ alkenedioic acid.

The present invention also provides methods of forming β-hydroxyalkyl amide curing agents comprising forming a neat mixture of one or more alkanolamine compound containing one or more β-aminoalcohol and one or more cyclic acidic compound and reacting to make curing agent compounds. The neat mixture is preferably free of solvent and can comprise a liquid, fluid dispersion, fluid suspension or solid (powder). Where only solids are used as reactants, for example diethanolamine, a dimer of succinic anhydride and phthalic anhydride, the reactants are heated to melt. In the method of forming oligomeric β-hydroxyalkyl amide curing agents, the methods further comprise heating to advance the reaction and form β-hydroxyalkyl amide curing agents having the desired effective β-hydroxyalkyl amide functionality.

Still further, the present invention also provides coatings and films formed from the coating compositions and articles coated therewith.

All ranges recited are inclusive and combinable. For example, an average particle size of 10 µm or more, for example, 15 µm or more, and which may range to 120 µm or less, or, preferably, 60 µm or less, will include ranges of from 10 µm to 120 µm, from 15 µm to 120 µm or less, from 10 µm to 60 µm, and from 15 µm to 60 µm.

Unless otherwise indicated, all temperature and pressure units are standard temperature and pressure (STP).

All phrases comprising parenthesis denote either or both of the included parenthetical matter and its absence. For example, the phrase "(co)polymer" includes, in the alternative, polymer, copolymer and mixtures thereof.

As used herein, the phrase "acrylic" refers to acrylic acid containing materials, methacrylic acid containing materials, acrylate containing materials, methacrylate containing materials, and materials containing combinations thereof.

As used herein, the phrase "α-alk(en)yl" includes alkyl, alkenyl, cycloalkyl and aryl group-substituted alkyl or alkenyl groups.

As used herein, the phrase "average particle size" shall mean, unless otherwise indicated, the particle diameter for which fifty percent of the total volume of the sample is in larger particles and fifty percent is in smaller particles, as determined by laser light scattering using a Malvern Mastersizer^{™} 2000 instrument (Malvern Instruments Inc., Southboro, MA) per the manufacturer's recommended procedures.

As used herein, unless otherwise indicated, the phrase "acid number" or "acid value" refers to the number of milligrams of potassium hydroxide necessary to neutralize the free acid in 1 gram of a sample, determined by titration.

As used herein, the phrase "coating powder" refers to a powder coating composition and the phrase "powder coating" refers to a coating formed from a coating powder.

As used herein, the phrase "effective β-hydroxyalkyl amide functionality" refers to the average number of β-hydroxyalkyl amide functional groups minus the average number of carboxyl functional groups in a given curing agent molecule, as determined by acid number titration of the sample. The effective functionality assumes that the cure agents form without reactions other than the desired amidation and esterification; thus, the measured acid numbers are proportional to cure agent molecular weight, degree of advancement, and hydroxyl functionality, and are used to indicate the number of β-hydroxyalkyl amide functional groups in a product curing agent molecule.

As used herein, unless otherwise indicated, the term "glass transition temperature" or "T_{g} " of any resin or (co)polymer is measured using differential scanning calorimetry (DSC) at a heating rate of 20°C per minute under nitrogen atmosphere. The T_{g} being reported at the inflection point of the transition. T_{g} may alternatively be calculated as described by Fox in Bull. Amer. Physics. Soc., 1, 3, page 123 (1956).

As used herein, the term "hybrid" of any (co)polymer or resin shall refer to adducts, grafts or block copolymers and compatible or compatibilized blends of such (co)polymers or resins, such as the compatibilized epoxy and polyester blend of an epoxy polyester hybrid.

As used herein, unless otherwise indicated, the phrase "per hundred parts resin" or "phr" means the amount, by weight, of an ingredient per hundred parts, by weight, based on the total amount of resin, reactant monomer, and (co)polymer contained in a composition, including cross-linking agents, curing agents and any reactive additive, such as an additional polymer or resin.

As used herein, the term "polymer" includes (co)polymers that are the reaction product of any number of different monomers, such as terpolymers, and tetra polymers, and, further, includes random, block, segmented and graft copolymers, and any mixture or combination thereof.

As used herein, the phrase "wt.%" stands for weight percent.

The powder compositions of the present invention provide coatings having a lengthened gel time or cure time of the coating system, thereby providing smooth, defect-free films or coatings even at thicknesses above 75 to 100 µm (3 - 4 mil), and up to 175 µm in thickness. Further, the powder compositions enable extended time for film formation, thereby allowing the majority of generated moisture to escape from the film prior to coating gelation. When the coatings form, any defects present inside or on the surface of the coating are permanently locked into place and do not appear on the coating surface. Desirably, the powder compositions of the present invention enable the provision of smooth, defect free coatings on complex parts having a lot of Faraday cages, such as indoor and outdoor furniture; extruded aluminum window profiles; aluminum and plastic automotive wheels and trim; molded parts; routed parts, e.g. cabinet doors, lathed pieces, e.g. table legs or trim and molding, and threaded pieces. Still further, the curing agents of the present invention are inexpensive to make, when compared to tetrafunctional β-hydroxyalkyl amide curing agents.

The reaction of lactones or lactides and alkanolamines to make a β-hydroxyalkyl amide curing agent does not liberate volatile organic by-products and does not require the elimination of water to be driven to completion. Accordingly, the formation of the β-hydroxyalkyl amide curing agents minimizes by-product formation, increasing amide yield and avoiding the need for costly product purification.

The β-hydroxyalkyl amide curing agent may comprise the reaction product of one or more alkanolamine compound with one or more lactone, lactide, or mixture of aromatic anhydride with aliphatic anhydride.

Suitable alkanolamine compounds may comprise mono-ethanolamine, diethanolamine (2,2'-iminodiethanol), triethanolamine, mono-isopropanolamine (1-methyl ethanolamine), di-isopropanolamine (bis-2-hydroxy-1-propyl)amine), and tri-isopropanolamine, as well as any C₁ to C₁₈ linear or branched α-alk(en)yl substituted mono-alkanolamine, di-alkanolamine or tri-alkanolamine compound containing a β-aminoalcohol group, such as, for example, 1-alk(en)ylethanol amines, di-(1-alk(en)yl)ethanol amines or tri-(1-alk(en)yl)ethanol amines. Suitable alk(en)yl substituents may contain aryl, cycloalkyl and alkenyl groups. Examples of suitable alkanolamines may comprise n-butylethanolamine, β-cyclohexanolamine, n-butyl isopropanolamine, and 2-amino-1-propanol. Examples of suitable substituted alkanolamines may comprise, such as 1-(m)ethyl isopropanol amine, 1-methyl ethanolamine. 2-(methylamino)-ethanol, 2-(ethylamino)-ethanol and 2-(butylamino)-ethanol. Preferred alkanolamine compounds may comprise dialkanolamines having two β-aminoalcohol groups, such as, for example, diethanolamine, di-isopropanolamine, diisobutanolamine (bis-2-hydroxy-1-butyl)amine, and di-β-cyclohexanolamine.

A suitable trialkanolamine is, for example, tris(hydroxymethyl)aminomethane, the use of which would, for example, allow the introduction of oxazoline groups into the β-hydroxyalkyl amide curing agents.

Suitable lactones may comprise lactides, glycolides, and lactones of any C₂ to C₈ hydroxycarboxylic acids, as well as dimers and oligomers thereof. Preferred lactones include any comprising 5 to 7 membered rings, such as ε-caprolactone, γ-butyrolactone and any α-C₁ to C₁₈ alk(en)yl monosubstituted forms thereof, such as α-methyl- ε-caprolactone or α-methyl- γ-butyrolactone.

Suitable aliphatic anhydrides may be chosen from, for example, fumaric anhydride, malonic anhydride, (methyl)succinic anhydride, sebacic anhydride, azelaic anhydride, adipic anhydride, glutaric anhydride, tartaric anhydride, itaconic anhydride, maleic anhydride, maleic anhydride, citric anhydride, 2-dodecene-1-yl-succinic anhydride, butane tricarboxylic anhydride, trimesic anhydride, tricarballylic anhydride, cyclobutane tetracarboxylic (di)anhydride, 1,2,3,4-butanetetracarboxylic (di)anhydride, 5-norbornene-2,3-dicarboxylic anhydride, norbornene-2,3-dicarboxylic anhydride, dimers thereof, oligomers thereof, polyanhydrides thereof, and mixtures thereof; suitable aromatic anhydrides may be chosen from, for example, phthalic anhydride, tetrahydrophthalic anhydride, anhydride, hexahydrophthalic anhydride, naphthalic anhydride, 4-methylphthalic anhydride, 4-methylhexahydrophthalic anhydride, 4-methyltetrahydrophthalic anhydride, trimellitic anhydride, hemimellitic anhydride, pyromellitic anhydride, dimers thereof, oligomers thereof, polyanhydrides thereof, and mixtures thereof.

β-hydroxyalkyl amide functional compounds from any cyclic acidic compounds may be produced by simple mixing of the alkanolamine with the lactone, lactide or mixture of aliphatic and aromatic anhydrides in a neat, anhydrous or "dry" reaction mixture, and, if needed, heating, such as when reacting dimers or oligomers of lactones.

β-hydroxyalkyl amide curing agents from lactides, lactones or their mixtures are formed in one step by reacting a neat mixture. No highly volatile organic by-products are formed by this reaction. The reaction to form the β-hydroxyalkyl amide curing agent from a lactone or lactide and an alkanolamine may be run for a period of from 1.5 to 24 hours, preferably, 2 hours or more, and, preferably, up to 6 hours. Specific, non-limiting, examples of this reaction are the reaction of ε-caprolactone or of butyrolactone with diethanolamine to form their corresponding β-hydroxyalkyl amide products.

If the β-hydroxyalkyl amide curing agents from lactides, lactones or their mixtures are liquid or are sticky solids having a T_{g} below 30 °C, such curing agents can be liquid injected into an extruder, can be mixed with a filler or extender carrier, such as, for example, calcium carbonate, iron oxide, barytes, talc, diatomaceous earth, wollastonite, aluminum silicates or titanium dioxide by various masterbatch methods, or can be mixed into coating powder raw mixes. Suitable mixing methods include mixing by hand, in a planetary mixer, paddle mixer, Banbury mixer, bead mill, ball mill, or in a vertical or horizontal mixer, such as a cone, cylindrical or drum mixer having one or more impeller, blade or perforated blade mixing element. Exemplary vertical mixers are available from Plasmec, Lonate Pozzolo, IT, and include liquid cooled mixing blades. Curing agents in liquid form may also be, but are not preferably, mixed via the same equipment directly into coating powder raw mixes, followed by extrusion.

The methods of forming the oligomeric β-hydroxyalkyl amide curing agent comprise reacting a neat simple mixture of the alkanolamine compound and a mixture of aromatic anhydride with aliphatic anhydride at the lowest temperature at which a fluid mixture of the reactants can be maintained, for example, 20°C to 100°C, preferably, 50°C or more, or, preferably, 80°C or less, until the anhydride has reacted, followed by advancing the reaction by reducing the reaction pressure and/or heating from 80 to 150°C, or preferably, 135°C or less to form a curing agent that has an effective β-hydroxyalkyl amide functionality of from 1.1 to 5.5. Suitable oligomeric β-hydroxyalkyl amide curing agents have an effective β-hydroxyalkyl amide functionality of 1.5 or more, or up to 3.99, or, preferably, 1.7 or more, or, preferably, 3.5 or less, or, more preferably, 2.0 or more.

The mole ratio of the alkanolamine compound to the total mixture of aromatic anhydride with aliphatic anhydride used to make the oligomeric β-hydroxyalkyl amide curing agent may range from 0.7:1 to 1.5:1, preferably, 0.85:1 or more, or up to and including 1.4:1, and, more preferably, 0.95:1 or more, or up to and including 1.3:1. The time for reacting a neat simple mixture may range from 2 to 48 hours, preferably, 12 hours or more, or, preferably, up to 30 hours. The time for advancing the reaction may range from 1 to 12 hours, preferably, up to 10 hours, or, more preferably, up to 5 hours. Because acid number goes down as the advancement proceeds, the extent of advancement of the oligomeric β-hydroxyalkyl amide curing agent can be represented by the acid number of the curing agent. Suitable acid numbers should be low enough to reflect a solid curing agent and may range from 40 to 200 mg KOH/g, preferably, 150 mg KOH/g or less.

To control any exotherm in making the oligomeric β-hydroxyalkyl amide curing agent, the alkanolamine and the cyclic acidic compound can each be fed into a reaction vessel, the contents of the reaction vessel can be stirred, the reaction vessel can be jacketed in a heat exchanger, and/or the reaction can be run under a reducing (inert) atmosphere, such as N₂. Preferably, the reactants are fed to a reaction vessel, such as a batch reactor. More preferably, the reactants are fed to a jacketed, stirred reaction vessel.

One or more polar solvent may be added to the reaction mixture used to make the oligomeric β-hydroxyalkyl amide curing agent to increase the rate of reaction. Preferably, no solvent is used. Suitable polar solvents may include, for example, lower alkanols, preferably, methanol; alkyl(aryl) esters of carboxylic acids, such as ethyl acetate, alkyl(aryl) ethers, aromatic alcohols, such as toluene, aryl esters of carboxylic acids, and aryl ethers. Solvents can be removed by vacuum distillation in a partial or complete vacuum and/or by non-solvent precipitation of the oligomeric β-hydroxyalkyl amide curing agent from the reaction medium, if necessary, followed by air drying, (partial) vacuum drying, or drying at a slightly elevated temperature below the T_{g} of the oligomeric β-hydroxyalkyl amide curing agent.

Any carboxyl-functional film-forming polymer or resin may be used as a film-forming polymer or resin so long as it has a T_{g} of from 30 to 180°C, preferably 45°C or more, or 120°C or less, more preferably, 90°C or less. Suitable carboxyl-functional film-forming polymers or resins may be chosen from a polyester containing at least two carboxylic acid groups; an unsaturated polyester containing at least two carboxylic acid groups; an addition (co)polymer containing at least two copolymerized carboxylic acid-functional monomers.

Suitable addition copolymers may include, for example, those formed by the copolymerizing one or more ethylenically unsaturated monomer, including, for example, (meth)acrylates, like butyl acrylate, or vinyl monomers, like styrene or substituted styrene, with one or more ethylenically unsaturated carboxylic acid or other acid, including, for example, (meth)acrylic acid, maleic acid, maleic anhydride, phosphoalkyl (meth)acrylates, such as phosphoethyl (meth)acrylate.

Suitable polyesters may have an acid number of from 15 to 100 mg KOH/g, preferably, 30 mg KOH/g or more, or up to 75 mg KOH/g. Linear polyesters have acid numbers of up to 40 mg KOH/g; preferably, branched polyesters have acid numbers of up to 50 mg KOH/g. Branched polyesters, i.e. those made from one or more triol and/or one or more tricarboxylic acid, are preferred. Such polyesters may be prepared via conventional, preferably bulk, polycondensation of one or more aromatic or aliphatic polyfunctional carboxylic acid (PCA), or its derivative, with one or more polyol, preferably in a ratio such that the resulting polyester is substantially carboxyl-functional group terminated. As used herein, the term "substantially carboxyl-functional group terminated" means that 95 wt.% or more of the terminal groups on a linear or branched polyester are carboxyl groups.

PCAs suitable for making polyester resins may include, for example, aromatic acids, like terephthalic acid, isophthalic acid (IPA), phthalic acid, and 1,2,4-benzenetricarboxylic acid; and, aliphatic acids, like succinic acid, adipic acid, citric acid, tetrahydrophthalic acid, hexahydrophthalic acid, maleic acid, fumaric acid, and cyclohexanedicarboxylic acids. Preferred PCAs are terephthalic acid, IPA, cyclohexanedicarboxylic acids, tetrahydrophthalic acid, and mixtures of aromatic and aliphatic PCAs.

Suitable polyols may include, for example, one or more C₂ to C₂₄ linear or branched diol or triol, or oligomer thereof, like mono- and polyethylene glycols, polypropylene glycols, neopentyl glycol (NPG), 2-methyl-1,3-propylene glycol, hydroxypivalyl hydroxypivalate, 2-butyl-2-ethyl-1,3-propylene glycol (BEPD), cyclohexanedimethanols, 1,4-butanediol, 1,3-butanediol, 1,2-butanediol, 1,2- hexanediol and 1,6-hexanediol, glycerol, trimethylolpropane, trimethylolethane and pentaerythritol. Preferred polyols are NPG, BEPD, cyclohexanedimethanols, 1,4-butanediol, trimethylolpropane, and mixtures thereof.

One or more polyester may be weatherable. Suitable weatherable polyesters may comprise, for example, the reaction product of from 15 to 90 mole% of IPA, from 5 to 30 mole%, for example from 15 to 30 mole%, of 1,4-cyclohexane dicarboxylic acid, with the remainder of acid, for example, 65 mole% or less, of terephthalic acid, based upon the total number of moles of acid present, and from 50 to 100 mole%, such as 70 to 100 mole%, of branched polyols having from 5 to 11 carbon atoms, such as NPG, based upon the total number of moles of polyols present, wherein at least 8 mole % of all reactants have a functionality of three or higher, based upon the total number of moles of both acid and polyol present.

In another preferred embodiment, hybrid powder compositions may comprise one or more β-hydroxyalkyl amide curing agent of the present invention and epoxy-polyester hybrid powder, such as, for example, a glycidyl (meth)acrylate (GMA) polymer or oligomer reacted with a carboxyl functional polyester resin or with a carboxyl and hydroxyl functional polyester resin. Such compositions provide coatings for automotive wheels having a reduced number of defects.

To make coating or film-forming powders, suitable amounts of the one or more β-hydroxyalkyl amide curing agent made from lactones or lactides may range from 2 to 12 parts per hundred parts resin (phr), preferably from 5 phr or more or, preferably, up to 8 phr, or, more preferably, 6 phr or more. Suitable amounts of the one or more oligomeric β-hydroxyalkyl amide curing agent may range from 1 to 25 phr, preferably, up to 15 phr, and, preferably, 5 phr or more.

Rapid curing coating powders may comprise a blend of the β-hydroxyalkyl amide curing agent of the present invention with one or more tetrafunctional β-hydroxyalkyl amide curing agent, such as N,N,N',N'-tetrakis(2-hydroxyethyl) hexanediamide, N,N,N',N'-tetrakis(2-hydroxypropyl)hexanediamide, di(β-hydroxyethyl) propylamide and di(β-hydroxyalkyl) C₈ to C₄₀ alkylamide. One or more β-hydroxyalkyl amide curing agent made from lactones or lactides may be used in the amount of from 1 to 8 phr, preferably, 3 phr or more, and, preferably, up to 7 phr, while amounts of the tetrafunctional β-hydroxyalkyl amide curing agent may range from 1 to 10 phr, preferably 1 to 4 phr; the total amount of β-hydroxyalkyl amide curing agent in such a blend may range from 2 to 15 phr. In a blend of one or more oligomeric β-hydroxyalkyl amide curing agent and one or more tetrafunctional β-hydroxyalkyl amide curing agent, the one or more tetrafunctional β-hydroxyalkyl amide curing agent may be used in amounts of from 1 to 10 phr, preferably, 3 phr or more, and, preferably, up to 7 phr; and, the total amount of β-hydroxyalkyl amide curing agent may range from 2 to 25 phr.

Powder compositions may suitably comprise additional ingredients, such as, for example, pigments or colorants, fillers, matting agents, texturing agents, melt flow aids, wrinkle forming catalysts, leveling agents or degassing additives, light stabilizers, anti-corrosives, mold release agents and antioxidants.

One or more of each of pigments or colorants, e.g. titanium dioxide, carbon black, organic phthalocyanines, hollow sphere pigments or opaque polymers; and fillers, such as china clay, barytes, and large size fillers may be used in amounts of from 10 to 120 phr. Large size fillers, e.g. those having an average particle size of over 25 µm, such as diatomaceous earth, wollastonite or calcium carbonate, can be added to create a matte finish coating or a capstock.

To create a matte finish or appearance, powders may comprise waxes, PTFE, organophilic clays, acid-functional acrylate (co)polymers, and mixtures thereof, in the amount of from 1 phr or more, or 2 phr or more, and up to 50 phr, or up to 20 phr, or up to 10 phr.

Melt flow aids, such as alkyl (meth)acrylate copolymers, and silicones, and mold-release agents may comprise 0.1 phr or more, or 0.5 phr or more, or 1 phr or more, and up to 4 phr, or up to 2.5 phr, or up to 1.5 phr in the powders of the present invention. One suitable alkyl acrylate (co)polymer comprises Resiftow^{™} P67, available from Estron Chemical Inc., New York, NY.

Leveling agents, e.g. benzoin (2-Hydroxy-1,2-diphenylethanone) and alkyl ethers and esters of benzoin, and light stabilizers, e.g. hindered amines and hindered phenols, may comprise from 0.1 to 4 phr, for example, 0.2 or more phr, in the powder compositions of the present invention.

Anticorrosives such as zinc phosphate, other metal phosphates, and phosphorous containing polyesters may comprise amounts ranging up to 20 phr, for example, from 0.01 to 10 phr, or up to 5 phr of the powder compositions of the present invention. Antioxidants, such as benzotriazole, may comprise amounts of from 0.1 to 1 phr of the powder compositions of the present invention.

Dry flow aids, such as fumed silica and alumina, and fumed silica treated with alkoxysilanes, may be added to coating powders in amounts of from 0.1 phr or more, or 0.5 phr or more, and up to 1.5 phr, or up to 1.0 phr.

Powder compositions of the present invention comprise a distribution of particles having an average particle size of 10 µm or more, for example, 15 µm or more, and which may range to 120 µm or less, or, preferably, 60 µm or less. Preferably, the powders of the present invention have an average particle size of 15 µm or more, or they can have an average particle size of 25 µm or less.

Powder compositions may be formed in any known manner such as, for example, by combining film-forming polymer or resin, the β-hydroxyalkyl amide curing agent, any pigments and any additional ingredients, except dry flow aids, into an extruder or a melt mixer, following by drying, adding dry flow aids, crushing and grinding to a desired particle size.

The powder compositions may be applied to substrates in any known manner, such as, for example, by electrostatic or triboelectric spray or fluidized bed coating. Alternatively, the powders can be formed into films by extrusion, in-mold coating or on-mold coating techniques, or by compressing the powders either underneath a heated membrane or platen and onto a substrate, or between heated membranes, platens or substrates.

The applied coating powder or film formed therefrom may be cured at temperatures as low as from 100 to 250°C, preferably below 200°C, or, more preferably, up to 190°C, or, even more preferably, up to 150°C so as to allow treatment of plastic, paper or wood products, various composites, such as engineered wood or medium density fiberboard (MDF), and sheets and composites made from cellulosics. Coatings and films may suitably be as thick as 200 µm (8 mil), and preferably, such thicknesses range up to 100 um (4 mil); suitable films should range 12.5 µm (0.5 mil) or thicker and, preferably, should range 50 µm (2 mil) or thicker, for example, 75 µm or thicker.

The coating powders of the present invention may be applied or extruded onto substrates such as metal, ceramic, concrete, wood, plastic and (ligno)cellulosic substrates. Coatings made with the coating powders may be decorative and/or weatherable. Substrate articles to be coated with the coating powders may include, for example, agricultural and construction equipment and parts thereof; machinery, small motors, and automotive parts, such as automotive wheels; building materials, such as aluminum window frames, bathroom and kitchen tile, drain tile and roofing tile and aluminum siding; indoor and outdoor furniture, such as ready to assemble wood and fiberboard furniture and metal or plastic deck furniture; industrial goods, such as pipes, steel springs, sheet metal, steel coils, cans, bottles springs, girders; and, sheet molded composites, laminated articles, molded plastic articles, female molds, textiles, fibers, and woven webs.

### EXAMPLES

In the following Examples, coating properties were measured, as follows:

Dry Film Thickness: Film thickness on ferrous substrates was measured according ASTM D 1186-01 TEST METHOD B - ELECTRONIC GAUGES "Standard Test Methods for Nondestructive Measurement of Dry Film Thickness of Nonmagnetic Coatings Applied to a Ferrous Base" (2001). Dry film thickness on nonferrous substrates was measured according ASTM D 1400-00 "Standard Test Method for Nondestructive Measurement of Dry Film Thickness of Nonconductive Coatings Applied to a Nonferrous Metal Base" (2000). Film thickness is reported as the range (low to high) of three readings measured in the center portion of the panel. Film thickness measurements for coatings applied to both ferrous and nonferrous metal substrates were acquired using a POSITECTOR^{™} Model 6000-FN1 Coating Thickness Gauge (DeFelsko Corporation, Ogdensburg, NY).

204.4°C Gel Time: Measures the time it takes for a powder formulation to transform from a mobile liquid state to a gelled solid state while stirring on a hot-plate at the specified temperature, thereby indicating how fast a powder formulation will cure at a specified temperature. One-eighth of a teaspoon of the powder formulation to be tested was dropped onto a hot-plate with simultaneous starting of a timer. The sample was stirred with the tip of a wooden stirrer with sufficient motion to mix and melt the sample over an area 2.54 cm in diameter. Stirring was continued with periodic lifting of the stirrer about 5 cm from the hot-plate. When the material no longer produces a continuous strand from the hot-plate to the stirrer when the stirrer was lifted, the material was considered gelled. Acceptable gel times are those shorter than the would-be in use cure time at the tested temperature.

191°C Hot Plate Melt Flow (HPMF): Determines the length of flow of thermosetting powder coating compositions under specified conditions. A 0.75 g sample of the powder coating composition was pressed in a pellet press to the dimensions of 12.7 mm diameter by 6 mm thickness. A hot-plate at a constant temperature was set at a 35° angle. The pressed pellet was placed at the top of the hot-plate and allowed to soften and flow down the plate due to the influence of gravity. The distance that the pellet flows was measured and reported in millimeters. Generally, the further the pellet flows, the smoother the resulting coating. For smooth coatings, HPMF values of greater than or equal to 60 millimeters are acceptable.

20° Gloss and 60° Gloss: The gloss of a cured coating was measured using a BYK-Gardner micro-TRI-gloss meter (Byk-Gardner USA, Columbia, MD) according to ASTM D 523-89 "Standard Test Method for Specular Gloss", (Reapproved 1999). Gloss readings were reported as the average of three readings near the center of the specimen and were recorded at both the 20° geometry and the 60° geometry. A 60° gloss reading may be interpreted as follows: 0 -10: Very low gloss - textured finish or smooth matte finish; 10 - 30: Low gloss; 30 - 70: Mid gloss; 70+: High gloss. The 20° geometry is advantageous for comparing specimens having 60° gloss values higher than 70.

Methyl Ethyl Ketone Resistance (MEK): Determines the degree of cure of a thermoset powder material when cured. A cotton-tipped applicator saturated with MEK was rubbed a total of 50 double rubs back and forth across the surface of a test coating using approximately 2.6 cm strokes and 2-2.5 Kg of application pressure. One back and forth motion equals one double rub. The test panels were rated in Table 1, as follows:

**TABLE 1**

| **MEK Resistance Rating** | **Degree of Cure** | **Comments** |
|---|---|---|
| 5 | Excellent | No rub-off of coating or pigmentation. No softening or dulling of coating surface. |
| 4 | Very Good | Slight rub-off of coating or pigmentation. |
| 3 | Fair to Good | Moderate rub-off of coating or pigmentation. |
| 2 | Poor to Fair | Heavy rub-off of coating or pigmentation. |
| 1 | Very Poor to None | Extreme rub-off of coating or pigmentation, or complete rub through to substrate. |

Impact, direct and reverse: Direct and reverse impact resistance was measured according to ASTM D 2794-93 "Standard Test Method for Resistance of Organic Coatings to the Effects of Rapid Deformation (Impact)" (Reapproved 2004), measuring the maximum force (dropping a four-pound (1.81 kg) impacting weight onto a 12.7 mm diameter (5/8 inch) indenter to generate impact) withstood by the test coating panel without the appearance of cracking. The cracking inspection was done without magnification. Measured with a BYK-Gardner Impact Tester Model G1120 (BYK-Gardner USA, Columbia, MD), one tests with the coated side up to give direct impact, coated side down to give reverse impact.

Mandrel Bend: Determines the resistance to cracking (flexibility) of attached organic coatings by bending a coated panel over a rod mandrel of specific diameter until the panel has been bent through 180° in approximately 1 second without cracking. Coating flexibility was determined according to ASTM D 522-93a (TEST METHOD B - CYLINDRICAL MANDREL TEST "Standard Test Methods for Mandrel Bend of Attached Organic Coatings" (Reapproved 2001) using a BYK-Gardner Cylindrical Mandrel Set Model MG-1412 (BYK-Gardner USA, Columbia, MD).

Crosshatch Adhesion: Coating adhesion, for coatings that have a film thickness less than 125 µm (5 mils) to substrates, was determined according to ASTM D 3359-02 "Standard Test Methods for Measuring Adhesion by Tape Test - Test Method B" (2002). A lattice pattern with six cuts in each direction through the film to the substrate was made, pressure-sensitive tape was applied over the lattice and then removed, and adhesion was evaluated by comparison with descriptions and illustrations. Films that show now loss of adhesion from the substrate are given a rating of 5B (excellent adhesion). Films that show greater than 65 area percent loss of adhesion from the substrate are given a rating of 0B (poor adhesion). Ratings between 0B and 5B depict intermediate levels of adhesion to the substrate.

Blocking 24hrs (43.3°C): The resistance of a coating powder to blocking, caking, or sintering was evaluated by subjecting a powder sample to elevated temperature and pressure for 24 hours. The powder sample was filled to a level of 30 mm high in a glass test tube (150 mm L X 25 mm diam), then a ceramic cylinder measuring (20 mm L X 22.5 mm diam) was carefully inserted into the test tube so that it rested on top of the powder sample. Weight was added on top of the ceramic cylinder such that the total weight exerted on the powder sample is 100 grams +/- 0.1 gram. The filled test tube, kept in a vertical orientation, was placed in a hot air circulation oven maintained at 43.33°C +/- 0.56 °C (110°F +/- 1 °F) for a period of 24 hours, and was removed and rated for blocking resistance. Ratings 1 and 10 denote the various powder blocking levels, with a rating of 1 denoting that the sample has remained a free-flowing powder with no signs of lumps or agglomeration, a rating of 10 denoting that the powder sample has completely fused into a solid lump, and a rating greater than 5 indicating that the powder sample has fused to the point where it cannot be recovered and used in normal powder coating application equipment.

PCI Smoothness: Coating smoothness was determined visually by comparing the orange-peel (surface roughness) of the example coatings to a set of 10 coating smoothness standards that were graded on a scale of smoothness from 1-10, with 1 being the roughest and 10 being the smoothest. Coating smoothness standards were supplied by the Powder Coating Institute (PCI), Alexandria, VA.

### B-Hydroxyalkyl Amide Curing Agent From ε-Caprolactone (ε-Cap) And Diethanolamine (DEA) In Examples 2-5 7-11, 13 and 15:

To a 1 L flask equipped with a condenser, thermocouple, and mechanical stirrer was added 315.0 grams (3 moles) of DEA. Without external heating, 342 grams (3 moles) of ε-Cap was added to the reaction flask by pipette in small aliquots over the course of 1 hour. The reaction mixture exhibited an exotherm to 41 °C. After the addition of ε-Cap was complete, the reaction mixture was stirred for another hour and was then cooled to yield a liquid product.

Extrusion in Examples 1-15 and 18-22: Unless otherwise indicated, a raw mix of every ingredient of each formulation, except for the dry flow aid, was pre-mixed in a Prism model 2318 UK mixer (Thermo Electron, Newington, NH) at 2100 RPM for 30 seconds and then compounded in a Baker Perkins (Grand Rapids, MI) corotating twin screw extruder at a barrel temp of 121.1°C and 415 rpm. The resulting extrudate was cooled in a chilled two roll mill and crushed and then blended with the dry flow aid by shaking together in a plastic bag for 10 seconds. The resulting product was ground in a high speed Brinkman ZM1000 mill (Brinkmann, Haan, DE) equipped with a 12 pin rotor and 1.0 mm screen around the rotor, and then filtered through a 104 µm (140 mesh) sieve.

Coating Application and Cure: Unless otherwise indicated, the coating powders in Examples 1-15 and 18-22 were applied electrostatically to a cold rolled steel, dull matte panel finish (Q-panel) 0.8 x 76 x 127 mm using a Nordson Versa-Spray^{™} handheld spray gun at 60 kV. Unless otherwise indicated, the thus formed coatings were cured at 190°C for 15 min.

### EXAMPLES 1-2: Coating Powders from B-Hydroxyalkyl Amide Curing Agents made with ε-Caprolactone

The coating powders had an average particle size of 40 µm. As shown in TABLE 2, below, the coating of the present invention (Example 2) exhibits significantly higher melt flows and smoothness when compared to coatings made with known tetrafunctional β-hydroxyalkyl amide curing agents.

**TABLE 2**

| **EXAMPLE** | **1** **Comparative** | **2** |
|---|---|---|
| FORMULATION | PHR | PHR |
| Carboxyl Functional Acrylic Resin Flake: Tg= 56°C, Acid Number= 33 - 37 (mg KOH/g) | 95 | -- |
| Carboxyl Functional Polyester Resin, Tg= 58°C Acid Number= 34 (mg KOH/g) | -- | 93 |
| Bisphenol A Epoxy Resin: Tg= 60°C; Epoxy Equiv. Wt. (EEW) = 650 - 725 | -- | -- |
| N,N,N',N'-tetrakis(2-hydroxyethyl) hexanediamide | 5 | -- |
| β-hydroxyalkyl amide curing agent from ε- caprolactone and diethanolamine (DEA) | -- | 7 |
| Calcium Carbonate (avg. particle size 6 µm) | 40 | 40 |
| 2-Hydroxy-1,2-diphenylethanone powder | 0.6 | 0.6 |
| Alkyl acrylate copolymer/ Silica mixture | 1.4 | 1.4 |
| Titanium Dioxide (rutile) (avg. particle size 0.26 µm) | 50 | 50 |
| Fumed Aluminum Oxide | 0.20% | 0.20% |
| COATING | | |
| Film Thickness µm (mils) | 48.2-53.3 µm (1.9-2.1) | 45.7-55.9 µm (1.8-2.2) |
| 204.4°C Gel Time (sec) | 57.09 | 142.41 |
| 190.5°C HPMF (mm) | 25 | 86.5 |
| 20° Gloss | 19.4 | 24.1 |
| 60° Gloss | 66.1 | 67.2 |
| MEK Resistance | 5 | 4 |
| Impact, direct Kg-m (in-lb) | 1.84 (160) | 1.38 (120) |
| Impact, reverse Kg-m (in-lb) | 1.84 (160) | 0.23 (20) |
| Pencil (mar, gouge) | F, 3H | F, 2H |
| 3mm (1/8") Mandrel Bend | Pass | Pass |
| Crosshatch Adhesion | 5B | 5B |
| Blocking 24hrs @ 43.3 °C | 3 | 5 |
| PCI Smoothness | 5 | 7 |

### EXAMPLES 3-5: Methods of Formulating Liquid B-Hydroxvalkyl Amide Curing Agents from Lactones

TABLE 3A compares various methods of incorporating liquid β-hydroxyalkyl amide curing agent into coating powder. In Example 3, liquid curing agent was added via direct injection to the extruder; in Example 4, liquid curing agent was added to a powder raw mix (unextruded) and mixed in a medium speed Prism mixer (model 2318 UK), followed by extrusion; and, in Example 5, 30 weight parts of the liquid curing agent was pre-mixed for 20 seconds at 2100 RPM in a medium speed Prism mixer (model 2318 UK), with 40 weight parts of calcium carbonate filler and 10 weight parts precipitated silica to make a 37.5 wt.% masterbatch of the curing agent on filler, designated as 615-42-1. The master batch was then added to the formulation raw mix which was then extruded.

The Example 3 formulation, except the dry flow aid, was compounded in a Coperion 9 barrel zsk-25 extruder (with gear pump to inject liquid in second barrel segment) (Coperion Corp., Ramsay, NJ) at 121.1°C (barrel temp) and 415 rpm screw speed.

**TABLE 3A**

| **EXAMPLE** | **3** | **4** | **5** |
|---|---|---|---|
| **Wt.%** | | | |
| Carboxyl Functional Polyester Resin, Tg= 56 °C Acid Number= 35 - 45 (mg KOH/g) | 60.2 | 60.3 | 59.8 |
| β-hydroxyalkyl amide curing agent made with ε-caprolactone and DEA | 4.5 | 4.5 | -- |
| Alkyl acrylate copolymer/ Silica mixture | 0.9 | 0.9 | 0.9 |
| 2-Hydroxy-1,2-diphenylethanone powder | 0.5 | 0.5 | 0.5 |
| Carbon Black (amorphous) beads (avg. particle size 0.12 µm) | 2.0 | 2.0 | 1.9 |
| Calcium Carbonate (avg. particle size 6 µm) | 31.8 | 31.8 | 22.7 |
| 615-42-1 | -- | -- | 14.3 (37.5 wt.% masterbatch) |
| Fumed Aluminum Oxide powder | .1 | .1 | .1 |

**TABLE 3B**

| **COATING** | **3** | **4** | **5** |
|---|---|---|---|
| Film Thickness µm (mils) | 50.8- 55.9 (2.0-2.2) | 50.8- 55.9 (2.0- 2.2) | 53.4- 61.0 (2.1-2.4) |
| 204.4°C Gel Time (sec) | 160.0 | 190.0 | 200.0 |
| 190.5 °C HPMF (mm) | 30.0 | 25.0 | 34.0 |
| 20° Gloss | 10.0 | 9.1 | 11.0 |
| 60° Gloss | 50.0 | 47.5 | 52.0 |
| MEK Resistance | 3 | 3 | 3 |
| Impact, direct Kg-m (in-lb) | 1.61 (140) | 0.23 (20) | 1.61 (140) |
| Impact, reverse Kg-m (in-lb) | 0.92 (80) | Failed | Failed |
| 3mm (1/8") mandrel bend | Pass | Pass | Pass |
| Crosshatch Adhesion | 5B | 5B | 5B |
| PCI Smoothness | 3 | 3 | 3 |

As shown in Table 3B above, direct injection of the liquid curing agent in Example 3 produced the best impact results, followed by master batch.

### EXAMPLES 6-9: Liquid B-Hydroxyalkyl Amide Curing Agents from Lactones Mixed with and vs. Tetrafunctional I3-hydroxyalkyl Amide Curing Agents

In Example 9, a 33 wt.% master batch of resin and curing agent, designated 33 wt.% MB, was made by injecting 33 wt.% of a β-hydroxyalkyl amide curing agent made with ε-caprolactone and diethanolamine (DEA) into 67 wt.% of a carboxyl functional polyester resin (Tg= 56°C, Acid Number= 35 - 45 (mg KOH/g polymer)) into the remaining formulation ingredients, except the dry flow aid, while extruding in a Coperion 9 barrel zsk-25 (with gear pump to inject liquid in second barrel segment) at a barrel temperature of 121.1 °C and 415 rpm screw speed.

The cured coatings have the properties shown in TABLE 4, below. TABLE 4 shows that all of the coatings made with the β-hydroxyalkyl amide curing agent of the present invention made from ε-caprolactone and DEA provide coatings having improved smoothness when compared to coatings made with solely a tetrafunctional N,N,N',N'-tetrakis(2-hydroxyethyl) hexanediamide curing agent (Example 6). In Examples 7 and 9, TABLE 4 also shows that the inventive coatings from linear polyester containing powders that have long gel times (>270 sec) give inadequate impact properties, indicating that branched polyesters may provide coatings with improved physical properties.

**TABLE 4**

| **EXAMPLE** | **6** **Comparative** | **7** | **8** | **9** |
|---|---|---|---|---|
| **PHR** | | | | |
| Linear Carboxyl Functional Polyester Resin, Tg= 67°C Acid Number= 33 (mg KOH/g) | 95 | 93 | 94 | 79 |
| 33 wt.% MB | -- | -- | -- | 21 |
| N,N,N',N'-tetrakis(2-hydroxyethyl) hexanediamide | 5 | -- | 3 | -- |
| β-hydroxyalkyl amide curing agent made with DEA and ε-caprolactone | -- | 7 | 3 | -- |
| Alkyl acrylate copolymer/ Silica mixture | 1.4 | 1.4 | 1.4 | 1.4 |
| 2-Hydroxy-1,2-diphenylethanone powder | 0.8 | 0.8 | 0.8 | 0.8 |
| Titanium Dioxide (rutile) (avg. particle size 0.26 µm) | 60 | 60 | 60 | 60 |
| **COATING** | | | | |
| Film Thickness µm (mils) | 55.9- 58.4 (2.2-2.3) | 45.7 - 55.9 (1.8-2.2) | 48.3- 53.3 (1.9-2.1) | 48.3- 53.3 (1.9-2.1) |
| 204.4°C Gel Time (sec) | 60 | >270 | 128 | >300 |
| 190.5°C HPMF (mm) | 65 | 118 | 77 | 75 |
| 20° Gloss | 65 | 88 | 82 | 75 |
| 60° Gloss | 86 | 97 | 96 | 89 |
| MEK Resistance | 4 | 1 | 4 | 1 |
| Impact, direct Kg-m (in-lb) | 1.84 (160) | 0.46 (40) | 1.84 (160) | 0.23 (20) |
| Impact, reverse Kg-m (in-lb) | 1.84 (160) | Fail | 1.84 (160) | (Fail) |
| 3mm (1/8") mandrel bend | Pass | Pass | Pass | Pass |
| Crosshatch Adhesion | 5B | 5B | 5B | 5B |
| PCI Smoothness (25.4 µm thick film) | 2 | 2 | 2+ | 3 |
| PCI Smoothness (50.8 µm thick film) | 4 | 6 | 6 | 6 |
| Average Particle Size (µm) | 59.1 | 64.4 | 64.8 | 66.8 |
| % under 10 µm | 4.2 | 3.4 | 3.7 | 2.8 |
| Opacity | 98.4 | 97.7 | 96.2 | 97.4 |
| **L*** | 96.02 | 95.94 | 96.44 | 96.46 |
| **a*** | -1.17 | -1.19 | -1.11 | -1.13 |
| **b*** | 0.13 | 0.92 | 0.75 | 1.31 |

### EXAMPLES 10-15: Liquid B-Hydroxyalkyl Amide Curing Agents from Lactones Mixed with and vs. Tetrafunctional β-hydroxyalkyl Amide Curing Agents

Each formulation is shown in TABLE 5, below. In Examples 10-14, excluding the dry flow aid, was compounded in a Coperion 9 barrel zsk-25 (with gear pump to inject liquid in second barrel segment) at a barrel temperature of 121.1 °C and 415 rpm screw speed. In Examples 10, 11 and 13, the curing agent was direct injected into the formulation during extrusion.

The powder of Example 13 was screened in a 75 µm (200 mesh) sieve to obtain a 40 µm average particle size for comparison of smoothness with a powder of an average particle size equal to Example 1.

**TABLE 5**

| **EXAMPLE** | **10** | **11** | **12** **Comparative** | ***13** | **14** **Comparative** | **15** |
|---|---|---|---|---|---|---|
| | ***Direct Injection Liquid to Extruder** | | | | | |
| **Wt. %** | | | | | | |
| Carboxyl Functional Polyester Resin (Tg= 56°C; Acid Number= 35-45 (mg KOH/g)) | 59.8 | 60.9 | -- | 59.8 | -- | 60.3 |
| β-hydroxyalkyl amide curing agent made with DEA and ε-caprolactone | 5.1 | 3.4 | -- | 5.1 | -- | 4.5 |
| Carboxyl Functional Polyester Resin (Tg= 65°C; Acid Number= 31-35 (mg KOH/g)) | -- | -- | 60.2 | -- | -- | -- |
| 1,3,5-Triglycidyl isocyanurate (TGIC) | -- | -- | 4.5 | -- | -- | -- |
| Alkyl acrylate copolymer/ Silica mixture | 0.9 | 1.4 | .91 | 0.9 | 0.5 | 0.9 |
| 2-Hydroxy-1,2-diphenylethanone powder | 0.5 | 0.8 | .52 | 0.5 | -- | 0.5 |
| Carbon Black (amorphous) beads (avg. particle size 0.12 µm) | 1.9 | 2.0 | 1.94 | 1.9 | 2.0 | 2.0 |
| Calcium Carbonate(avg. particle size 6 µm) | 31.7 | 32.2 | 31.9 | 31.7 | 32.1 | 31.8 |
| Carboxyl Functional Polyester Resin (Tg= 56°C; Acid Number= 33-37 (mg KOH/g)) | -- | -- | -- | -- | 62.2 | -- |
| N,N,N',N'-tetrakis(2-hydroxyethyl) hexanediamide | -- | -- | -- | -- | 3.3 | -- |
| Fumed Aluminum Oxide | .1 | .1 | .1 | .1 | .1 | .1 |

As shown in TABLE 6, below, in Example 10, direct injection of an increased amount of a liquid β-hydroxyalkyl amide curing agent made from ε-caprolactone can provide coatings having acceptable physical properties. As shown in Example 13, reducing the particle size of the coating powder may improve the physical properties of coatings made therewith. However, each coating made according to Examples 10, 11, 13 and 15 exhibited lower gloss and fewer defects than the comparative coatings of Examples 12 and 14. The lower gloss in Examples 10, 11, 13 and 15 suggests that the curing agents of the present invention improve pigment wetting or dispersion and coating flow.

**TABLE 6**

| **EXAMPLE** | **10 11** | | **12 Comparative** | ***13** | **14 Comparative** | **15** |
|---|---|---|---|---|---|---|
| | ***Direct Injection Liquid to Extruder** | | | | | |
| Film Thickness µm (mils) | 50.8-61.0 (2.0-2.4) | 53.3-61.0 (2.1-2.4) | 50.8- 53.3 (2-2.1) | 50.8-58.4 (2-2.3) | 50.8-61.0 (2-2.4) | 45.7-49.5 (1.8-1.95) |
| 204.4°C Gel Time (sec) | 210.0 | 158.0 | 126.0 | 153.0 | 119.2 | 134.0 |
| 190.5°C HPMF (mm) | 28.0 | 31.0 | 30.0 | 33.0 | 30.0 | 31.0 |
| 20° Gloss | 8.0 | 11.6 | 16.4 | 9.5 | 13.2 | 8.5 |
| 60° Gloss | 47.0 | 52.7 | 60.2 | 47.5 | 55.6 | 45.3 |
| MEK Resistance | 3+ | 1 | 4 | 4 | 4 | 3 |
| Impact, direct Kg-m (in-lb) | 1.61 (140) | 0.23 (20) | 1.84 (160) | 1.84 (160) | 1.84 (160) | 0.69 (60) |
| Impact, reverse Kg-m (in-lb) | 1.15(100) | Failed | 1.84(160) | 1.61 (140) | 1.84 (160) | 0.23(20) |
| 3m (1/8") mandrel bend | Pass | Pass | Pass | Pass | Pass | Pass |
| Crosshatch Adhesion | 5B | 5B | 5B | 5B | 5B | 5B |
| Avg Particle Size | 59.4 | 58.0 | 40.9 | 38.1 | -- | -- |
| Vol % under 10 µm | 4.8 | 5.0 | 10.3 | 5.9 | -- | -- |
| PCI Smoothness | 4 | 3+ | 4 | 4 | 4 | 4 |
| T_{g} onset (°C) | -- | -- | 59.4 | 53.6 | -- | -- |
| T_{g} (°C) | -- | -- | 61.1 | 53.7 | -- | -- |
| Density measured (g/cm³) | 1.515 | 1.470 | -- | -- | -- | -- |

### Example 16: (Comparative) Room Temperature Solid Oligomeric β-Hydroxyalkyl Amide Curing Agent From Phthalic Anhydride and Diethanolamine

A neat mixture of diethanolamine (150.00 g, 1.43 mol, Mp = 28 °C) and phthalic anhydride (211.32 g, 1.43 mol, Mp = 133 °C) was heated to from 80 to 100 °C in a 1-L glass reaction kettle. The mixture was stirred for 24 hours with a stainless steel air driven paddle stirrer under a nitrogen purge of 3.0 ml/min to yield an intermediate comprising di(β-hydroxyalkyl) monoamide of phthalic acid having an acid number of 204 mg KOH/g (Theoretical acid number (by formula) = 222). The intermediate was advanced by heating for 4 hours at 130 to 140 °C under nitrogen, while periodically applying vacuum (~20 mm Hg) to aid in the removal of water of reaction. The reaction was stopped prior to gelation and the product was poured into a metal pan and allowed to cool to room temperature. The solid oligomeric β-hydroxyalkyl phthalic amide curing agent product had an acid number of 137 mg KOH/g curing agent and a T_{g} of 57°C. The product had not yet advanced to the point at which it was a dimer formed by esterification of two di(β-hydroxyalkyl) phthalic monoamides, as the dimer would have had a lower theoretical acid number of 115 and a structure as set forth in formula (II).

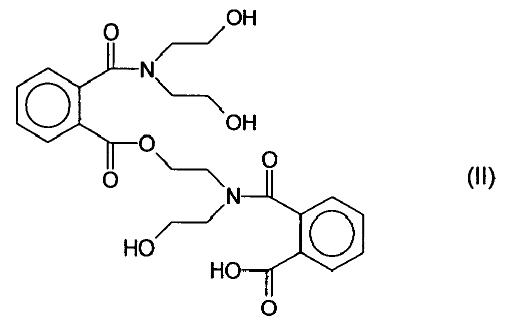

Accordingly, the oligomeric β-hydroxyalkyl phthalic amide curing agent reaction product of Example 16 had an effective β-hydroxyalkyl amide functionality of slightly less than 2.0; that is, slightly less than that of the actual dimer that has three (3) β-hydroxyalkyl amide groups and one (1) carboxyl group, giving an effective β-hydroxyalkyl amide functionality of 2.0.

### Example 17: Room Temperature Solid Oligomeric β-Hydroxyalkyl Amide Curing Agent

A neat mixture of diethanolamine (200.00 g, 1.90 mol), succinic anhydride (95.07 g, 0.95 mol, Mp = 120 °C) and phthalic anhydride (140.70 g, 0.95 mol) was reacted at from 50 to 80 °C for 24 hours, with stirring under a nitrogen gas purge of 3 ml/min. in a 1-L glass reaction kettle to yield an intermediate mixture of a di(β-hydroxyalkyl) monoamide of phthalic acid and a di(β-hydroxyalkyl) monoamide of succinic acid. (Acid number: 220 mg KOH/g; theoretical acid number: 248 mg KOH/g). Then, the intermediate was advanced by heating for 4 hours at 130 to 140°C, under nitrogen while periodically applying vacuum (~20 mm Hg) to aid in the removal of water of reaction. The reaction was stopped prior to gelation by pouring the molten resin into a metal pan and allowing to cool to room temperature, yielding a solid oligomeric β-hydroxyalkyl amide curing agent having an acid number of 100 mg KOH/g and a Tg of 39 °C. Based on the acid number of 100, the average oligomeric β-hydroxyalkyl amide curing agent in the product of Example 18 would be slightly smaller than a trimer of formula (III), below, which trimer has an effective β-hydroxyalkyl amide functionality of 3.0.

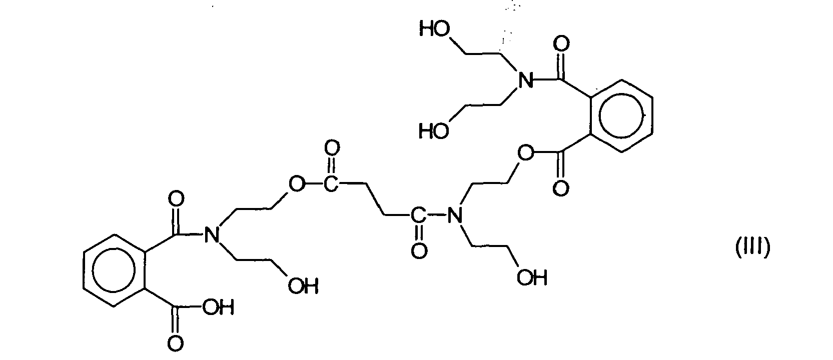

### Examples 18-20: Formulations of Oligomeric B-Hydroxyalkyl Amide Curing Agents

Each formulation is shown in TABLE 7, below. In each Example 18-20, the blend of crushed, cooled chips and dry flow aid was ground to a fine powder in a Retsch ZM 1000 Ultracentrifugal Mill (Retsch, Inc., Newtown, PA) at 15,000 RPM using a 1.0 mm screen. The resulting ground powder was screened through a 104 µm sieve, the material passing through the sieve used for subsequent powder application to form coatings.

**TABLE 7**

| **EXAMPLE** | **18 Comparative** | **19** | **20** |
|---|---|---|---|
| | **PHR** | | |
| Carboxyl Functional Acrylic Resin (Tg: 56°C, Acid Number: 33-37 (mg KOH/g)) | 95 | 90 | 90 |
| N,N,N',N'-tetrakis(2-hydroxyethyl) hexanediamide | 5 | -- | 3 |
| Curing Agent from Example 17 | -- | 10 | 4 |
| Alkyl acrylate copolymer/ Silica mixture | 1.4 | 1.4 | 1.4 |
| 2-Hydroxy-1,2-diphenylethanone powder | 0.8 | 0.8 | 0.8 |
| Carbon Black (amorphous) beads (avg. particle size 0.12 µm) | 1.5 | 1.5 | 1.5 |
| Fumed Aluminum Oxide | 0.2 % | 0.2% | 0.2% |

**TABLE 8**

| **EXAMPLE** | **18 Comparative** | **19** | **20** |
|---|---|---|---|
| Film Thickness µm (mils) | 61 - 76.2 (2.4 - 3.0) | 50.8 - 68.5 (2.0 - 2.7) | 53.3 - 69 (2.1 - 2.7) |
| Gel Time @ 204.4 °C (sec) | 61 | 457 | 158 |
| HPMF @ 190.5 °C (mm) | 109 | 110 | 115 |
| 20 ° Gloss | 82 | 45 | 50 |
| 60 ° Gloss | 95 | 80 | 84 |
| MEK Resistance | 4 | 4 | 4 |
| Impact, direct kg-m (in-lb) | 1.84 (160) | 1.84 (160) | 1.84 (160) |
| Impact, reverse kg-m (in-Ib) | 1.84 (160) | 1.84 (160) | 1.84 (160) |
| 3mm (1/8") mandrel bend | Pass | Pass | Pass |
| Crosshatch Adhesion | 5B | 5B | 5B |

As shown in TABLE 8, above, the coating of Example 19, comprising the oligomeric β-hydroxyalkyl amide curing agent of the present invention displayed a reduced 60° gloss, which was 15 units lower than the Example 18 comparative coating made with only the tetrafunctional β-hydroxyalkyl amide curing agent, N,N,N',N'-tetrakis(2-hydroxyethyl)hexanediamide. The powder of Example 19 had a very long gel time of 450 seconds compared to a gel time of 61 seconds for the powder of Example 18. Despite its long gel time, the powder Example 19 made coatings displaying fully desirable (physical) properties, including mandrel bend, crosshatch adhesion, MEK resistance and impact.

The powders of Examples 19 and 20 gave coatings that displayed little or no evidence of out-gassing defects due to moisture release during cure. On the other hand, the coating of Example 18 exhibited out-gassing pinhole defects on the thicker edges of the coated panel. Accordingly, the curing agent of the present invention provides a lengthened gel time in a coating or film without any loss of coating physical properties, and allows more time for moisture off-gas to escape during cure yielding coatings with few if any pinhole out-gas defects.

### Examples 21-22: Combining Tetrafunctional and Oligomeric B-Hydroxyalkyl Amide Curing Agents

Shown in TABLE 9A, each formulation of Examples 21-22 was compounded, absent dry flow aid, by extruding using a 30 mm Baker Perkins twin screw extruder at 400 RPM, 50% torque and a 93 °C barrel temperature setting. After cooling, crushing and post-blending with a dry flow aid, the extrudates were ground to a fine powder in a Retsch ZM 1000 Ultracentrifugal Mill at 15,000 RPM using a 1.0 mm screen.

**TABLE 9A**

| **EXAMPLE** | **21** **Comparative** | **22** |
|---|---|---|
| **PHR** | | |
| Carboxyl Functional Acrylic Resin Flakes (T_{g}: 56°C, Acid Number: 33-37 (mg KOH/g)) | 95 | 95 |
| N,N,N',N'-tetrakis(2-hydroxyethyl) hexanediamide | 5 | 3 |
| Oligomeric Curing Agent from Example 17 | --- | 5 |
| Alkyl acrylate copolymer/ Silica mixture | 1.4 | 1.4 |
| 2-Hydroxy-1,2-diphenylethanone powder | 0.8 | 0.8 |
| Titanium Dioxide (rutile) (avg. particle size 0.26 µm) | 50 | 50 |
| Fumed Aluminum Oxide | 0.2 % | 0.2% |

As TABLE 9B, below, shows, the gel times of Examples 21 and 22 are close together, demonstrating little difference in the outgassing properties of the two coatings. Accordingly, real cost savings can be realized by using the oligomeric β-hydroxyalkyl amide curing agent of the present invention in comparison to tetrafunctional β-hydroxyalkyl amide curing agents.

**TABLE 9B**

| **COATINGS** | **EXAMPLE 21** **Comparative** | **EXAMPLE 22** |
|---|---|---|
| Film Thickness µm (mils) | 48.3 - 53.3 (1.9 - 2.1) | 53.3 - 58.4 (2.1 - 2.3) |
| Gel Time @ 204.4°C (sec) | 77 | 107 |
| HPMF @ 190.5 °C (mm) | 38 | 28 |
| 20° Gloss | 58 | 27 |
| 60° Gloss | 93 | 74 |
| MEK resistance | 4 | 4 |
| Impact, direct kg-m (in-lb) | 1.84 (160) | 1.84 (160) |
| Impact, reverse kg-m (in-lb) | 1.84 (160) | 1.84 (160) |
| 3mm (1/8") mandrel bend | Pass | Pass |
| Crosshatch Adhesion | 5B | 5B |

## Claims

1. A powder composition comprising one or more film-forming polymer or resin and one or more β-hydroxyalkyl amide curing agent chosen from β-hydroxyalkyl amide curing agents made from the reaction of one or more lactone or lactide with one or more alkanolamine compound containing one or more β-aminoalcohol, oligomeric β-hydroxyalkyl amide curing agents made from the reaction of one or more mixture of aromatic anhydride with aliphatic anhydride with one or more alkanolamine compound containing one or more β-aminoalcohol, mixtures thereof, and mixtures thereof with one or more tetrafunctional β-hydroxyalkyl amide curing agent,
wherein the said one or more film-forming polymer or resin is chosen from carboxyl-functional polyesters having an acid number of from 15 to 100 mg KOH/g, carboxyl-functional acrylic polymers having an acid number of from 15 to 100 mg KOH/g, carboxyl-functional unsaturated polyesters, carboxyl-functional polyester containing urethane groups, epoxy-polyester hybrids, mixtures thereof, and combinations thereof.

2. A composition as claimed in claim 1, wherein the said alkanolamine compound is chosen from diethanolamine, diisopropanolamine, a C₁ to C₁₈ linear or branched α-alk(en)yl substituted diethanolamine, a C₁ to C₁₈ linear or branched α-alk(en)yl substituted diisopropanolamine, and a mixture thereof.

3. A composition as claimed in claim 1, wherein the said β-hydroxyalkyl amide curing agent comprises one or more compound of the following formula (I): 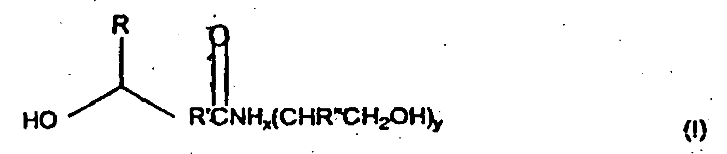 in which formula, R and R" independently represent H, or monovalent C₁ to C₁₈ linear or branched alkyl radicals which may contain aryl, cycloalkyl and alkenyl groups; R' represents either a covalent bond or a divalent C₁ to C₅ alkylene radical where the alkylene radical may bear alkyl group substituents; y is the integer 1 or 2; x is 0 or 1, such that (x + y) =2.

4. A composition as claimed in claim 1, wherein the said oligomeric β-hydroxyalkyl amide curing agents have an effective β-hydroxyalkyl amide functionality of from 1.1 to 5.5.

5. A composition as claimed in claim 4, wherein the said aromatic anhydride is phthalic anhydride and the aliphatic anhydride is chosen from one or more anhydride of a C₄ to C₁₈ alkanedioic acid, such as succinic anhydride, glutaric anhydride or adipic anhydride, or one or more anhydride of a C₄ to C₁₈ alkenedioic acid.

6. A composition as claimed in claim 1, wherein the said film-forming polymer or resin comprises a branched carboxyl-functional polyester.

7. A composition as claimed in claim 1, wherein the said film-forming polymer or resin comprises a carboxyl-functional polyester made from one or more polyol reactant chosen from neopentyl glycol, 2-butyl-2-ethyl-1,3-propylene glycol, cyclohexanedimethanols, 1,4-butanediol, trimethylolpropane, and mixtures thereof, or a carboxyl-functional polyester made from one or more polycarboxylic acid reactant chosen from terephthalic acid, isophthalic acid, tetrahydrophthalic acid, cyclohexanedicarboxylic acids, mixtures of aromatic and aliphatic polycarboxylic acids, and mixtures thereof.

8. A method of forming an oligomeric β-hydroxyalkyl amide curing agent comprising forming and reacting a mixture of one or more alkanolamine compound containing one or more β-aminoalcohol and one or more mixture of aromatic anhydride with aliphatic anhydride to make a β-hydroxyalkyl amide compound, and,
heating to advance the reaction to make the said oligomeric β-hydroxyalkyl amide curing agent.

9. A coating or film formed from the composition as claimed in claim 1.

10. A substrate coated with the composition as claimed in claim 1.

## Patentansprüche

1. Pulverzusammensetzung, umfassend ein oder mehrere filmbildende Polymere oder Harze und ein oder mehrere β-Hydroxyalkylamid-Härtungsmittel, ausgewählt aus β-Hydroxyalkylamid-Härtungsmitteln, hergestellt durch die Reaktion eines oder mehrerer Lactone oder Lactide mit einer oder mehreren Alkanolaminverbindungen, die einen oder mehrere β-Aminoalkohcle enthalten, oligomeren β-Hydroxyalkylamid-Härtungsmitteln, hergestellt durch die Reaktion eines oder mehrerer Gemische von aromatischen Anhydriden mit aliphatischen Anhydriden mit einer oder mehreren Alkanolaminverbindungen, die einen oder mehrere β-Aminoalkohole enthalten, Gemischen davon, und Gemischen davon mit einem oder mehreren tetrafunktionellen β-Hydroxyalkylamid-Härtungsmitteln,
wobei das eine oder die mehreren filmbildenden Polymere oder Harze aus Carboxyl-funktionellen Polyestern mit einer Säurezahl von 15 bis 100 mg KOH/g, Carboxyl-funktionellen Acrylpolymeren mit einer Säurezahl von 15 bis 100 mg KOH/g, Carboxyl-funktionellen ungesättigten Polyestern, Carboxyl-funktionellen Polyestern, die Urethan-Gruppen enthalten, Epoxy-Polyester-Hybriden, Gemischen davon, und Kombinationen davon, ausgewählt sind.

2. Zusammensetzung nach Anspruch 1, wobei die Alkanolaminverbindung aus Diethanolamin, Diisopropanolamin, einem geradkettigen oder verzweigtkettigen C₁- bis C₁₈-a-Alk(en)yl-substituierten Diethanolamin, einem geradkettigen oder verzweigtkettigen C₁- bis C₁₈-a-Alk(en)yl-substituierten Diisopropanolamin und einem Gemisch davon, ausgewählt ist.

3. Zusammensetzung nach Anspruch 1, wobei das β-Hydroxyalkylamid-Härtungsmittel eine oder mehrere Verbindungen der folgenden Formel (I) umfaßt: 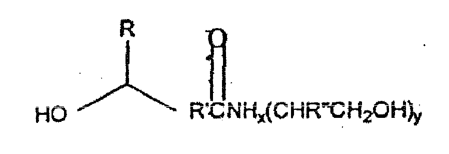 wobei R und R" unabhängig H oder monofunktionelle geradkettige oder verzweigtkettige C₁- bis C₁₈-Alkylreste, die Aryl-, Cycloalkyl- und Alkenylgruppen enthalten können, darstellen; R' entweder eine kovalente Bindung oder einen difunktionellen C₁- bis C₅-Alkylenrest darstellt, wobei der Alkylenrest Alkylgruppen-Substituenten tragen kann; y die ganze Zahl 1 oder 2 ist; x 0 oder 1 ist, derart dass (x+y)=2.

4. Zusammensetzung nach Anspruch 1 , wobei die oligomeren β-Hydroxyalkylamid-Härtungsmittel eine effektive β-Hydroxyalkylamid-Funktionalität von 1,1 bis 5,5 aufweisen.

5. Zusammensetzung nach Anspruch 4, wobei das aromatische Anhydrid Phthalsäureanhydrid ist und das aliphatische Anhydrid aus einem oder mehreren Anhydriden einer C₄- bis C₁₈-Alkandisäure, wie Succinanhydrid, Glutaranhydrid oder Adipinanhydrid, oder einem oder mehreren Anhydriden einer C₄- bis C₁₈-Alkendisäure ausgewählt ist.

6. Zusammensetzung nach Anspruch 1, wobei das filmbildende Polymer oder Harz einen verzweigtkettigen Carboxyl-funktionellen Polyester umfaßt.

7. Zusammensetzung nach Anspruch 1, wobei das filmbildende Polymer oder Harz einen Carboxyl-funktionellen Polyester, hergestellt aus einem oder mehreren Polyol-Reaktanden, ausgewählt aus Neopentylglycol, 2-Butyl-2-ethyl-1,3-propylenglycol, Cyclohexandimethanolen, 1,4-Butandiol, Trimethylolpropan und Gemischen davon, oder einen Carboxyl-funktionellen Polyester, hergestellt aus einem oder mehreren Polycarbonsäure-Reaktanden, ausgewählt aus Terephthalsäure, Isophthalsäure, Tetrahydrophthalsäure, Cyclohexandicarbonsäuren, Gemischen aromatischer und aliphatischer Polycarbonsäuren, und Gemischen davon, umfaßt.

8. Verfahren zum Bilden eines oligomeren β-Hydroxyalkylamid-Härtungsmittel, umfassend das Bilden und Umsetzen eines Gemisches aus einer oder mehreren Alkanolaminverbindungen, die einen oder mehrere β-Aminoalkohole enthalten, und eines oder mehrerer Gemische aromatischer Anhydride mit aliphatischen Anhydriden, um eine β-Hydroxyalkylamidverbindung herzustellen, und das Erwärmen, um die Reaktion zu fördern, um das oligomere β-Hydroxyalkylamid-Härtungsmittel herzustellen.

9. Beschichtung oder Folie, gebildet aus der Zusammensetzung nach Anspruch 1.

10. Substrat, beschichtet mit der Zusammensetzung nach Anspruch 1.

## Revendications

1. Composition pulvérulente comprenant un ou plusieurs polymères ou résines filmogènes et un ou plusieurs agents de durcissement de β-hydroxyalkyl amide choisis parmi les agents de durcissement de β-hydroxyalkyl amide obtenus de la réaction d'un ou plusieurs lactones ou lactides avec un ou plusieurs composés d'alcanolamine contenant un ou plusieurs β-aminoalcools, les agents de durcissement de β-hydroxyalkyl amide oligomères obtenus de la réaction d'un ou plusieurs mélanges d'anhydride aromatique et d'anhydride aliphatique avec un ou plusieurs composés d'alcanolamine contenant un ou plusieurs β-aminoalcools, leurs mélanges, et leurs mélanges avec un ou plusieurs agents de durcissement de β-hydroxyalkyl amide tétrafonctionnels,
dans laquelle le ou les polymères ou résines filmogènes sont choisis parmi les polyesters à fonction carboxyle ayant un indice d'acide de 15 à 100 mg de KOH/g, les polymères acryliques à fonction carboxyle ayant un indice d'acide de 15 à 100 mg de KOH/g, les polyesters insaturés à fonction carboxyle, les polyesters à fonction carboxyle contenant des groupes uréthanne, les hybrides d'époxy-polyester, leurs mélanges, et leurs combinaisons.

2. Composition suivant la revendication 1, dans laquelle ledit composé d'alcanolamine est choisi parmi la diéthanolamine, la diisopropanolamine, une diéthanolamine α-alk(én)yl-substituée linéaire ou ramifiée en C₁ à C₁₈, une diisopropanolamine α-alk(én)yl-substituée linéaire ou ramifiée en C₁ à C₁₈, et un mélange de celles-ci.

3. Composition suivant la revendication 1, dans laquelle ledit agent de durcissement de β-hydroxyalkyl amide comprend un ou plusieurs composés de la formule (I) : 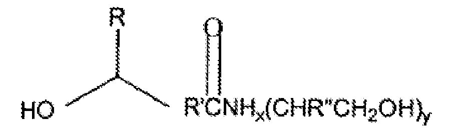 formule dans laquelle, R et R' représentent indépendamment H ou des radicaux alkyle linéaires ou ramifiés en C₁-C₁₈ monovalents qui peuvent contenir des groupes aryle, cycloalkyle et alcényle; R' représente soit une liaison covalente, soit un radical alkylène en C₁ à C₅ divalent où le radical alkylène peut comporter comme substituants des groupes alkyle; y est le nombre entier 1 ou 2; x est 0 ou 1, de telle sorte que (x + y) = 2.

4. Composition suivant la revendication 1, dans laquelle les agents de durcissement de α-hydroxyalkyl amide oligomères précités ont une fonctionnalité α-hydroxyalkyl amide effective de 1,1 à 5,5.

5. Composition suivant la revendication 4, dans laquelle l'anhydride aromatique précité est de l'anhydride phtalique et l'anhydride aliphatique est choisi parmi un ou plusieurs anhydrides d'un acide alcanedioïque en C₄ à C₁₈, comme l'anhydride succinique, l'anhydride glutarique ou l'anhydride adipique, et un ou plusieurs anhydrides d'un acide alcènedioïque en C₄ à C₁₈.

6. Composition suivant la revendication 1, dans laquelle le polymère ou la résine filmogène précité comprend un polyester à fonction carboxyle ramifié.

7. Composition suivant la revendication 1, dans laquelle le polymère ou la résine filmogène précité comprend un polyester à fonction carboxyle obtenu à partir d'un ou plusieurs réactifs de polyol choisis parmi le néopentyl glycol, le 2-butyl-2-éthyl-1,3-propylène glycol, les cyclohexanediméthanols, le 1,4-butanediol, le triméthylolpropane et leurs mélanges, ou un polyester à fonction carboxyle obtenu à partir d'un ou plusieurs réactifs d'acide polycarboxylique choisis parmi l'acide téréphtalique, l'acide isophtalique, l'acide tétrahydrophtalique, les acides cyclohexanedicarboxyliques, les mélanges d'acides polycarboxyliques aromatiques et aliphatiques, et leurs mélanges.

8. Procédé de formation d'un agent de durcissement de β-hydroxyalkyl amide oligomère comprenant la formation et la réaction d'un mélange d'un ou plusieurs composés d'alcanolamine contenant un ou plusieurs β-aminoalcools et d'un ou plusieurs mélanges d'anhydride aromatique et d'anhydride aliphatique pour obtenir un composé de β-hydroxyalkyl amide, et
le chauffage pour développer la réaction et obtenir l'agent de durcissement de β-hydroxyalkyl amide oligomère précité.

9. Revêtement ou film formé de la composition suivant la revendication 1.

10. Substrat revêtu de la composition suivant la revendication 1.
